# EUROPEAN PATENT APPLICATION

(11) **EP 2 475 128 A1**
(43) Date of publication of application: **11.07.2012**
(21) Application number: 11360004.3
(22) Date of filing: 07.01.2011
(51) Int. Cl.: H04L 5/00

(54) **Data transmission in a multi-carrier wireless telecommunications network**

(71) Applicant: Alcatel Lucent, 75007 Paris (FR)
(72) Inventor: Wong, Shin Homg, Chippenham Wiltshire, SN14 0SP (GB); Baker, Matthew P.J., Canterbury Kent, CT2 9DB (GB); Scarisbrick, Chris D., Swindon, SN5 6HY (GB)
(74) Representative: Coghlan, Judith Elizabeth Kensy

(57) **Abstract**

A method of encoding and transmitting data from a first network node to a second network node in a multi-carrier wireless telecommunications network. A base station and computer program product operable to perform that method. A first network node is operable to transmit data to a second network node on a plurality of transmission carriers, each transmission carrier being transmitted within an associated predetermined radio frequency band.
The method comprises the steps of:
determining that there is user data to be transmitted from said first network node to said second network node;
dividing said user data into one or more transport blocks;
grouping said plurality of transmission carriers into one or more transmission carrier groups in accordance with predetermined carrier grouping criteria; and
transmitting each of said transport blocks of user data on one of said transmission carrier groups. Such a method reduces signalling within a multi-carrier wireless telecommunications network and allows an increase in carriers provided within such a network without a significant increase in network signalling.

## Description

### FIELD OF THE INVENTION

The present invention relates to a method of transmitting data in a multi-carrier wireless telecommunications network, a network node operable to carry out that method and a computer program product.

### BACKGROUND

Single carrier wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high speed downlink packet access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless telecommunication systems operating in single carrier mode, user equipment can move between geographical base station coverage areas. Service provided to user equipment is overseen by a radio network controller (RNC). The radio network controller communicates with user equipment and base stations and determines which base station each user equipment is primarily connected to. Furthermore, a radio network controller acts to control and communicate with a base station and user equipment when user equipment moves from the geographical area served by one base station to a geographical area served by another base station.

It has been proposed to allow base stations and user equipment to each transmit simultaneously on more than one carrier. Furthermore it has been proposed to allow user equipment and base stations to receive simultaneously on more than one carrier frequency. Each carrier, both uplink and downlink, is typically independently power controlled and independently scheduled by a base station. Provision of more than one downlink carrier, for example, on four frequency carriers, allows for an increase in data throughput to the user equipment. Networks having more than two carriers may be referred to as "multi carrier high speed downlink packet access" (MC-HSDPA) networks. The term "multi-carrier" network used herein is envisaged to cover the case where two, three, four, or more downlink (or uplink) carriers are provided for in a network.

Provision of multi-carrier functionality may have associated problems such as an increase in control signalling overhead. Accordingly, it is desired to improve the operation of a wireless telecommunications network having multi-carrier functionality.

### SUMMARY

Accordingly, a first aspect provides a method of encoding and transmitting data from a first network node to a second network node in a multi-carrier wireless telecommunications network, the first network node being operable to transmit data to the second network node on a plurality of transmission carriers, each transmission carrier being transmitted within an associated predetermined radio frequency carrier,
the method comprising the steps of:
(i) dividing user data for transmission from the first network node to the second network node into one or more transport blocks;
(ii) grouping the plurality of transmission carriers into one or more transmission carrier groups in accordance with predetermined carrier grouping criteria; and
(iii) transmitting each of the transport blocks of user data on one of the transmission carrier groups.

Multi-Carrier (MC) operation such as Carrier Aggregation (CA) in Long Term Evolution wireless telecommunication network architecture allows user equipment (UE) to receive downlink data on more than one carrier. Such a scheme allows each UE to increase its downlink throughput by a factor equal to the number of carriers used in a particular mode of MC operation.

It is possible in MC schemes to implement a scheme such that user data is divided into several Transport Blocks (TrBlk) and a TrBlk is transmitted via each carrier. For example, in a four carrier network, user data can be divided into 4 TrBlks and those 4 TrBlks are sent over 4 carriers. It will be appreciated, that in comparision to a single carrier arrangement, additional network signalling is required to support the provision of the additional carriers and their respective TrBlks. As the number of carriers increases, the amount of signalling increases.

For example, as the number of carriers increased from 2 to 4, an ACK/NACK codebook size required to acknowledge receipt of transport blocks more than doubles. The increase in signalling requires an increase in the signalling packet size in uplink carriers. Since available uplink transmit power is typically limited, an increase in packet size results in a reduction of coverage.

The first aspect aims to limit or reduce the quantity of network signalling needed when the number of carriers in a MC system increases.

In LTE-Advanced, ACK/NACK signalling can be "bundled" by means of a logical "AND" operation when independent transport blocks are received simultaneously on multiple carriers. According to such a scheme, a receiving device sends an "ACK" only if all the transport blocks are decoded correctly. If, for example, one transport block is not decoded correctly, "NACK" is sent and all the transport blocks have to be retransmitted, since the sending device has no knowledge as to which of the transport blocks failed. As a result of such a scheme, a loss of throughput may result. Furthermore, in a case in which independently transmitted transport blocks are transmitted on different carriers, there is typically no correlation between decoding failures on the different carriers. A further limitation of such an approach is that no additional coding gain is provided by the use of the multiple carriers, because each transport block is independently coded within its own single carrier.

Instead of transmitting one TrBlk per carrier, aspects described herein recognise that network signaling may be reduced by transmitting a TrBlk over a group of carriers, where a size of a transmitted TrBlk may be larger than that typically carried by a single carrier.

Throughout this document, a group of carriers carrying a TrBlk will be referred to as "an entity". The first aspect recognises that by grouping the plurality of transmission carriers according to predetermined grouping criteria, overall network efficiency with regard to signaling may be achieved, in comparison to a system in which carriers are placed in groups without grouping criteria. One or more of a number of possible grouping criteria may be applied as described in more detail below.

A frequency band is a block of frequency spectrum containing a continuous set of frequency carriers. Usually in a multi-carrier multi-band operation, the frequency bands are not contiguous.

In one embodiment, the method further comprises the step of determining that there is user data to be transmitted from the first network node to the second network node.

In one embodiment, the first network node comprises a base station and said transmission carrier comprise downlink carriers.

In one embodiment, the second network node comprises user equipment.

The first aspect recognises that much of the signaling associated with transmission of user data is proportional to the number of TrBlks used to transmit that user data. The grouping of carriers reduces the number of TrBlks sent, and consequently the amount of signaling required to support the TrBlks reduces. In particular, it will be appreciated that a UE needs only to acknowledge the receipt of a TrBlk and hence if the number of TrBlk reduces, the number of acknowledgements required to be signalled within the network also reduces.

Embodiments of the first aspect also recognise that signalling formats established for a given number of carriers with one TrBlk per carrier can be reused for a scheme according to embodiments in which there are a higher number of carriers with one TrBlk per entity. Accordingly, in some embodiments of the first aspect, one or more aspects of network signaling, for example, ACK/NACK signalling, channel state information signalling, or information about the transmission format used for a TrBlk, may use the same signalling formats as for a smaller number of carriers in the case where a higher number of carriers is to be utilised. For example, the signaling format used in a 4 carrier MC can be reused in an 8 carrier MC by appropriate use of a pair of carriers to transmit a TrBlk.

Embodiments of the first aspect further recognise that coding gain may be increased by encoding a transport block across multiple carriers instead of confining it to a single carrier. Therefore according to some embodiments, a TrBlk transmitted over a group of carriers is transmitted with joint forward error correction coding and interleaving across the carriers in a group.

In some embodiments, it will be appreciated that no change may be required at the physical layer of the wireless telecommunications network. At the physical layer, the same resources, for example, HS-PDSCH, can be used to carry a TrBlk. Such embodiments reduce resulting hardware complexity. The only changes required are at the Transport and MAC (Medium Access Control) layers. At those layers, a new set of (larger) TrBlk sizes would need to be defined, but such changes may be relatively easily implemented, since they relate only to changes to the software.

Embodiments may provide a future-proof principle for further extension to even higher numbers of carriers (e.g. 16) in the future. Rather than continuing to increase the amount of signalling linearly with the number of carriers, according to embodiments the number of carriers per TrBlk (i.e. the number of carriers in an entity) may be increased in line with the number of carriers provided, whilst signalling overhead can be maintained at a substantially constant level.

In MC systems in which 2 carriers are provided, additional signaling load (in the uplink) is not significant. Therefore the grouping of carriers as described in embodiments herein, allowing the sending of a single TrBlk across multiple carriers, was not obvious in this case.

In one embodiment, the step of grouping the transmission carriers comprises the steps of:
determining a number of available feedback signalling instances within the multi-carrier wireless telecommunications network and grouping the plurality of transmission carriers into a number of transmission carrier groups, the number of transmission carrier groups numbering no fewer than the determined number of available feedback signalling instances.

In some embodiments of the invention, restrictions may be imposed regarding the grouping of carriers into an entity. For example, it may be specified that grouping does not occur if the total number of carriers is not greater than the number of feedback signalling instances provided. For example, in an HSDPA system, up to 4 ACK/NACK instances can be returned, supporting up to 4 carriers. Therefore a restriction could be applied that no grouping will be done which would reduce the number of ACK/NACK instances to be returned below 4. Such a restriction would avoid defining an unnecessary number of entity groupings.

In one embodiment, a feedback signalling instance may, for example, comprise an ACK/NACK instance in a sub-frame in a channel. That channel may, for example comprise a channel such as HS-DPCCH in UMTS.

In one embodiment, the step of grouping said transmission carriers comprises the steps of: grouping the plurality of transmission carriers into one or more transmission carrier groups, each of the transmission carrier groups comprising a substantially identical number of transmission carriers. Another possible restriction may be that the groupings must result in the number of carriers in each group forming an entity are split as evenly as possible. For example, in the case of 8 carriers, 4 TrBlks may be transmitted by carrying each TrBlk on a pair of carriers, rather than carrying 3 TrBlks each on a single carrier and the 4^{th} TrBlk on 5 carriers. It will be appreciated that such restrictions may be applied in combination.

In one embodiment, the step of grouping said transmission carriers comprises the steps of:
allocating the plurality of transmission carriers to a transmission carrier group in dependence upon the predetermined radio frequency band associated with each of the plurality of transmission carriers.

In one embodiment, the transmission carrier groups each contain one or more of the plurality of transmission carriers having predetermined radio frequency bands associated therewith which are contiguous in a radio frequency domain.

In one embodiment, the carriers in an entity are contiguous in the frequency domain. Such an arrangement exploits the fact that the radio propagation condition for carriers that are next to each other typically does not vary significantly as compared to carriers that are not adjacent in the frequency domain.

In one embodiment, the transmission carrier groups contain a different number of the plurality of transmission carriers. In one embodiment, the entities in a MC operation may contain different numbers of carriers. Such an arrangement introduces flexibility in grouping carriers into entities and recognises that the number of available carriers may not divide equally to the desired number of entities. Furthermore, the carriers may span over two frequency bands and if the desire to have only contiguous carriers in an entity is required, then it may be necessary to have different number of carriers in different entities.

In one embodiment, the plurality of transmission carriers within a given transmission carrier group are operable to provide a different level of resource, and transmit differently sized portions of the transport block allocated to the transmission carrier group. In one embodiment, each carrier within an entity may use different amounts of physical resource. Although contiguous carriers (in the frequency spectrum) are likely to have similar radio propagation conditions, the traffic load in each carrier may be different leading to different levels of resource availability among the carriers in an entity. For example, different-sized portions of a TrBlk can be carried on each carrier. In an HSDPA system, such an arrangement may be achieved by assigning different numbers of channelisation codes (i.e. spreading codes) to each carrier in an entity.

A second aspect provides a computer program product operable, when executed on a computer, to perform the method of the first aspect.

A third aspect provides a base station operable to encode and transmit data from the base station to user equipment in a multi-carrier wireless telecommunications network, the base station being operable to transmit data to the user equipment on a plurality of transmission carriers, each transmission carrier being transmitted within an associated predetermined radio frequency band,
the base station comprising:
(i) data division logic operable to divide user data for transmission from the base station to the user equipment into one or more transport blocks;
(ii) carrier grouping logic operable to group the plurality of transmission carriers into one or more transmission carrier groups in accordance with predetermined carrier grouping criteria; and
(iii) transmission logic operable to transmit each of the transport blocks of user data on one of the transmission carrier groups.

In one embodiment, the base station further comprises: determination logic operable to determine that there is user data to be transmitted from the base station to the user equipment.

In one embodiment, the carrier grouping logic is operable to group the transmission carriers by:
determining a number of available feedback signalling instances within the multi-carrier wireless telecommunications network and grouping the plurality of transmission carriers into a number of transmission carrier groups, the number of transmission carrier groups numbering no fewer than the determined number of available feedback signalling instances.

In one embodiment, the carrier grouping logic is operable to group the transmission carriers by:
grouping the plurality of transmission carriers into one or more transmission carrier groups, each of the transmission carrier groups comprising a substantially identical number of transmission carriers.

In one embodiment, the carrier grouping logic is operable to group the transmission carriers by:
allocating the plurality of transmission carriers to a transmission carrier group in dependence upon the predetermined radio frequency band associated with each of the plurality of transmission carriers.

In one embodiment, the carrier grouping logic is operable to group the transmission carriers by: allocating carriers to transmission carrier groups such that transmission carrier groups contain one or more of the plurality of transmission carriers which have predetermined radio frequency bands associated therewith which are contiguous in a radio frequency domain. That is to say, the carriers are contiguous within a radio frequency band.

In one embodiment, the carrier grouping logic is operable to allocate carriers to groups in such a manner that transmission carrier groups contain a different number of the plurality of transmission carriers.

In one embodiment, the plurality of transmission carriers within a given transmission carrier group are operable to provide a different level of resource, and transmit differently sized portions of the transport block allocated to the transmission carrier group.

A fourth aspect provides a method of encoding and transmitting feedback information from a first network node to a second network node in a multi-carrier wireless telecommunications network, the first network node being operable to:
receive signals from the second network node on a plurality of reception carriers, each reception carrier being transmitted within an associated predetermined radio frequency band, and transmit data to the second network node on one or more transmission carriers,
the method comprising the steps of:
   (i) determining that the plurality of reception carriers have been grouped into reception carrier groups in accordance with predetermined carrier grouping criteria;
   (ii) monitoring for data traffic received across the determined reception carrier groups;
   (iii) generating feedback information for the reception carrier group based upon received data traffic; and
   (iv) encoding and transmitting a single feedback signal relating to the reception carrier group.

In a wireless telecommunications network operating with multiple downlink carriers, feedback is likely to be required for each downlink carrier provided. Such feedback may, for example, comprise: acknowledgement feedback for an implemented acknowledgement protocol, channel quality indicators (CQI), and pre-coding control indicators (PCI) used to indicate suitable transmission parameters for the data transmissions on each downlink carriers. It will be understood that such feedback can help to ensure that the network operates efficiently. For example, the feedback associated with utilising a data transmission regime in which an acknowledgement protocol is operating enables transmission of redundant data packets, or transport blocks of data to be minimised. Feedback information in such a protocol (in the form of an ACK or NACK) can inform the network of whether a data packet is successfully received and, if an acknowledgement of successful receipt is fed back and received, there is no need to re-send that data packet. Protocols of the HARQ (Hybrid Automatic Repeat Request) types are examples of such an acknowledgement protocol.

In some embodiments of described methods, channel state feedback signalling may not be increased linearly with the number of carriers provided in a MC system. Channel state feedback typically comprises: Channel Quality Indicators (CQI) and Precoding Control Information (PCI). In one embodiment of this aspect, a single CQI value may be generated and fed back, that CQI value reflecting the average or overall channel quality (e.g. SINR) of all the carriers in an entity. Such a "overall" value may be preferred since it may take into account the coding gain achieved by coding and interleaving a single TrBlk across all the carriers of the entity.

In one embodiment, said single feedback signal relating to feedback in relation to the group of reception carriers may be supplemented by one or more additional differential carrier feedback values, the differential carrier feedback values indicating, for a carrier within the reception carrier group, a difference between a given feedback value for that carrier and the feedback signal relating to feedback in relation to the group of reception carriers.

In some embodiments of aspects described, a single CQI value may be supplemented by one or more additional differential CQI values, those additional values indicating the relative difference in channel quality between the CQI of a single carrier in the entity and the single (absolute) CQI value. In some embodiments, such differential CQI values may be fed back for one or more of the carriers in an entity. The number of bits required to signalling a differential CQI value within a network may typically be less than that required for an absolute CQI value, and therefore the total number of bits required can be reduced compared to signalling an absolute CQI value for each carrier in the entity. In some embodiments, one or more PCI values may be fed back per entity, depending on the frequency-domain granularity preferred for the precoding.

In one embodiment, the method further comprises the steps of transmitting channel state feedback from said second network node to said first network node, wherein said channel state feedback represents the average channel state feedback for all the reception carriers in a group.

In one embodiment, the channel state feedback further comprises a differential channel state indication for a reception carrier in said group relative to said average channel state feedback.

A fifth aspect provides a computer program product operable, when executed on a computer, to perform the method of the fourth aspect.

A sixth aspect provides user equipment operable to encode and transmit feedback information from said user equipment to a base station in a multi-carrier wireless telecommunications network, said user equipment being operable to receive signals from said base station on a plurality of reception carriers, each reception carrier being transmitted within an associated predetermined radio frequency band, and transmit data to said base station on one or more transmission carriers,
said user equipment comprising:
(i) determination logic operable to determine that said plurality of reception carriers have been grouped into reception carrier groups in accordance with predetermined carrier grouping criteria;
(ii) monitoring logic operable to monitor for data traffic received across said determined reception carrier groups;
(iii) feedback generation logic operable to generate feedback information for said reception carrier group based upon received data traffic; and
(iv) transmission logic operable to encode and transmit a single feedback signal relating to said reception carrier group.

In one embodiment, said single feedback signal relating to feedback in relation to the group of reception carriers may be supplemented by one or more additional differential carrier feedback values, the differential carrier feedback values indicating, for a carrier within the reception carrier group, a difference between a given feedback value for that carrier and the feedback signal relating to feedback in relation to the group of reception carriers.

In one embodiment, the method further comprises the steps of transmitting channel state feedback from said second network node to said first network node, wherein said channel state feedback represents the average channel state feedback for all the reception carriers in a group.

In one embodiment, the channel state feedback further comprises a differential channel state indication for a reception carrier in said group relative to said average channel state feedback.

A seventh aspect provides a method of activating and deactivating carriers in a multi-carrier wireless telecommunications network, said multi-carrier telecommunications network comprising a plurality of first network nodes being operable to transmit signals to at least one second network node on a plurality of transmission carriers, each transmission carrier being transmitted within an associated predetermined radio band, said method comprising the steps of:
(i) determining that said plurality of transmission carriers have been grouped into transmission carrier groups in accordance with predetermined carrier grouping criteria;
(ii) determining that one or more transmission carrier groups meet a set of predetermined activation or deactivation criteria; and
(iii) transmitting a message to activate or deactivate said transmission carriers forming said one or more transmission carrier groups meeting said set of predetermined activation or deactivation criteria.

In some embodiments of aspects described, physical layer "order" signals (known in HSDPA as "HS-SCCH orders" since they are carried on the High-Speed Shared Control Channel (HS-SCCH)) may be used to activate and deactivate entities. Typically such orders are only used to activate and deactivate individual carriers. By using a single HS-SCCH order to activate or deactivate a whole entity (i.e. all the carriers within the entity), embodiments may thus avoid the amount of HS-SCCH order signalling being increased compared to a case with a smaller total number of carriers.

An eighth aspect provides a computer program product operable, when executed on a computer, to perform the method of the seventh aspect.

A ninth aspect provides a network node operable to activate and deactivate carriers in a multi-carrier wireless telecommunications network, said multi-carrier telecommunications network comprising a plurality of first network nodes being operable to transmit signals to at least one second network node on a plurality of transmission carriers, each transmission carrier being transmitted within an associated predetermined radio band,
said network node comprising:
(i) determination logic operable to determine that said plurality of transmission carriers have been grouped into transmission carrier groups in accordance with predetermined carrier grouping criteria;
(ii) activation logic operable to determine that one or more transmission carrier groups meet a set of predetermined activation or deactivation criteria; and
(iii) transmission logic operable to transmit a message to activate or deactivate said transmission carriers forming said one or more transmission carrier groups meeting said set of predetermined activation or deactivation criteria.

In one embodiment the network node comprises a base station. In one embodiment the network node comprises a network scheduler. In one embodiment the network node comprises user equipment.

Features of embodiments of each aspect described herein may be combined with features of each other aspect as appropriate and in combinations other than those set out explicitly above.

Further particular and preferred aspects of the present invention are set out in the accompanying independent and dependent claims. Features of the dependent claims may be combined with features of the independent claims as appropriate and in combinations other than those explicitly set out in the claims.

### BRIEF DESCRIPTION OF THE DRAWINGS

Embodiments of the present invention will now be described further, wi th reference to the drawings in which:
Figure 1 illustrates the main components of a telecommunications network according to one embodiment;
Figure 2 illustrates schematically a scheme of transmitting user data in a traditional MC system;
Figure 3 illustrates schematically transmission of user data according to one embodiment;
Figure 4 illustrates schematically an example of a method of sending user data according to one embodiment; and
Figure 5 illustrates schematically an example of a method of sending user data according to one embodiment.

### DESCRIPTION OF THE EMBODIMENTS

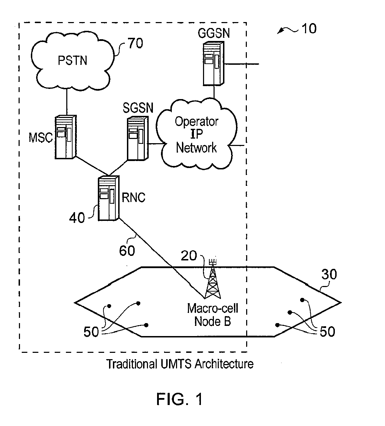

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

In HSDPA multi-carrier mode, each sector served by a base station can have several carrier frequencies or "carriers" associated therewith. A carrier or cell supported by a carrier covers the same geographical region as a sector. Each cell is served by a different carrier frequency. It will therefore be understood that in a single carrier system, a cell is equivalent to a sector since a sector has only one cell or carrier frequency. Nonetheless, in a multi-carrier network each sector may comprise several cells each cell being served simultaneously by a different carrier frequency.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a publ ic switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

A radio link is a connection between user equipment 50 and a cell of a base station. Dedicated radio links are formed when user equipment is in a "cell-DCH" state. When user equipment is not transmitting information such as text messages or voice information to a base station it is in a so-called "idle" state. When user equipment has information to transmit to a base station it chooses a connected state within which to operate. When in a "cell-DCH" state user equipment is able to use high speed uplink and/or downlink packet access radio resources to achieve a high uplink and/or downlink throughput.

In a multi-carrier system, each carrier will have independent downlink radio links from a base station to user equipment. Those downlink radio links are managed independently since each carrier will likely have different radio propagation paths to user equipment.

Multi-Carrier (MC) operation such as Carrier Aggregation (CA) in Long Term Evolution wireless telecommunication network architecture allows user equipment (UE) to receive downlink data on more than one carrier. Such a scheme allows each UE to increase its downlink throughput by a factor equal to the number of carriers used in a particular mode of MC operation.

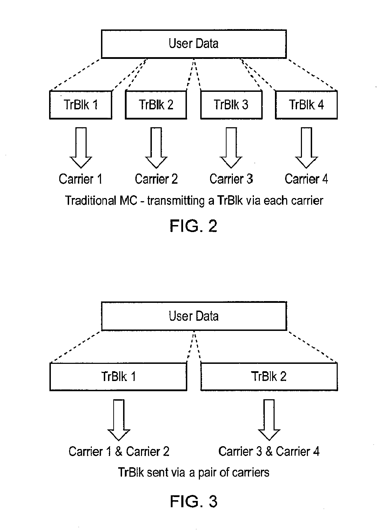

Figure 2 illustrates schematically a scheme of transmitting user data in a traditional MC system. In the scheme illustrated, user data is divided into several Transport Blocks (TrBlk) and a TrBlk is transmitted via each carrier. As illustrated, user data is divided into 4 TrBlks and those 4 TrBlks are sent over 4 carriers. It will be appreciated, that in comparision to a single carrier arrangement, additional network signalling is required to support the provision of the additional carriers and their respective TrBlks. As the number of carriers increases, the amount of signalling increases.

For example, as the number of carriers increased from 2 to 4, an ACK/NACK codebook size required to acknowledge receipt of transport blocks more than doubles. The increase in signalling requires an increase in the signalling packet size in uplink carriers. Since available uplink transmit power is typically limited, an increase in packet size results in a reduction of coverage.

Aspects described herein aim to limit or reduce the quantity of network signalling needed when the number of carriers in a MC system increases.

In LTE-Advanced, ACK/NACK signalling can be "bundled" by means of a logical "AND" operation when independent transport blocks are received simultaneously on multiple carriers. According to such a scheme, a receiving device sends an "ACK" only if all the transport blocks are decoded correctly. If, for example, one transport block is not decoded correctly, "NACK" is sent and all the transport blocks have to be retransmitted, since the sending device has no knowledge as to which of the transport blocks failed. As a result of such a scheme, a loss of throughput may result. Furthermore, in a case in which independently transmitted transport blocks are transmitted on different carriers, there is typically no correlation between decoding failures on the different carriers. A further limitation of such an approach is that no additional coding gain is provided by the use of the multiple carriers, because each transport block is independently coded within its own single carrier.

Instead of transmitting one TrBlk per carrier, aspects described herein recognise that network signaling may be reduced by transmitting a TrBlk over a group of carriers, where a size of a transmitted TrBlk may be larger than that typically carried by a single carrier.

Throughout this document, a group of carriers carrying a TrBlk will be referred to as "an entity".

Figure 3 illustrates schematically transmission of user data according to one embodiment. In the illustrated embodiment, user data is divided into 2 TrBlks and each TrBlk is transmitted via a pair of carriers. For the same user data, the size of the TrBlk in Figure 3 is twice that shown in Figure 2.

Such an arrangement recognizes that the much of the signaling associated with transmission of user data is proportional to the number of TrBlks used to transmit that user data. The grouping of carriers reduces the number of TrBlks sent, and consequently the amount of signaling required to support the TrBlks reduces. In particular, it will be appreciated that a UE needs only to acknowledge the receipt of a TrBlk and hence if the number of TrBlk reduces, the number of acknowledgements required to be signalled within the network also reduces.

Embodiments also recognise that signalling formats established for a given number of carriers with one TrBlk per carrier can be reused for a scheme according to embodiments in which there are a higher number of carriers with one TrBlk per entity. Accordingly, in some embodiments of the invention, one or more aspects of network signaling, for example, ACK/NACK signalling, channel state information signalling, or information about the transmission format used for a TrBlk, may use the same signalling formats as for a smaller number of carriers in the case where a higher number of carriers is to be utilised. For example, the signaling format used in a 4 carrier MC can be reused in an 8 carrier MC by appropriate use of a pair of carriers to transmit a TrBlk.

Embodiments recognise that coding gain may be increased by encoding a transport block across multiple carriers instead of confining it to a single carrier. Therefore according to some embodiments, a TrBlk transmitted over a group of carriers is transmitted with joint forward error correction coding and interleaving across the carriers in the group.

In some embodiments, it will be appreciated that no change may be required at the physical layer of the wireless telecommunications network. At the physical layer, the same resources, for example, HS-PDSCH, can be used to carry a TrBlk.Such embodiments reduce resulting hardware complexity. The only changes required are at the Transport and MAC (Medium Access Control) layers. At those layers, a new set of (larger) TrBlk sizes would need to be defined, but such changes may be relatively easily implemented, since they relate only to changes to the software.

Embodiments may provide a future-proof principle for further extension to even higher numbers of carriers (e.g. 16) in the future. Rather than continuing to increase the amount of signalling linearly with the number of carriers, according to embodiments the number of carriers per TrBlk (i.e. the number of carriers in an entity) may be increased in line with the number of carriers provided, whilst signalling overhead can be maintained at a substantially constant level.

In MC systems in which 2 carriers are provided, additional signaling load (in the uplink) is not significant. Therefore the grouping of carriers as described in embodiments herein, allowing the sending of a single TrBlk across multiple carriers was not obvious in this case.

In one embodiment, the carriers in an entity are contiguous in the frequency domain. Such an arrangement exploits the fact that the radio propagation condition for carriers that are next to each other typically does not vary significantly as compared to carriers that are not adjacent in the frequency domain.

In one embodiment, the entities in a MC operation may contain different numbers of carriers. Such an arrangement introduces flexibility in grouping carriers into entities and recognises that the number of available carriers may not divide equally to the desired number of entities. Furthermore, the carriers may span over two frequency bands and if the desire to have only contiguous carriers in an entity is required, then it may be necessary to have different number of carriers in different entities.

In one embodiment, each carrier within an entity may use different amounts of physical resource. Although contiguous carriers (in the frequency spectrum) are likely to have similar radio propagation conditions, the traffic load in each carrier may be different leading to different levels of resource availability among the carriers in an entity. For example, different-sized portions of a TrBlk can be carried on each carrier. In an HSDPA system, such an arrangement may be achieved by assigning different numbers of channelisation codes (i.e. spreading codes) to each carrier in an entity.

In some embodiments of the invention, restrictions may be imposed regarding the grouping of carriers into an entity. For example, it may be specified that grouping does not occur if the total number of carriers is not greater than the number of feedback signalling instances provided. For example, in an HSDPA system, up to 4 ACK/NACK instances can be returned, supporting up to 4 carriers. Therefore a restriction could be applied that no grouping will be done which would reduce the number of ACK/NACK instances to be returned below 4. Such a restriction would avoid defining an unnecessary number of entity groupings. Another possible restriction may be that the groupings must result in the number of carriers in each group forming an entity.are split as evenly as possible. For example, in the case of 8 carriers, 4 TrBlks may be transmitted by carrying each TrBlk on a pair of carriers, rather than carrying 3 TrBlks each on a single carrier and the 4^{th} TrBlk on 5 carriers.

In some embodiments of aspects described, physical layer "order" signals (known in HSDPA as "HS-SCCH orders" since they are carried on the High-Speed Shared Control Channel (HS-SCCH)) may be used to activate and deactivate entities. Typically such orders are only used to activate and deactivate individual carriers. By using a single HS-SCCH order to activate or deactivate a whole entity (i.e. all the carriers within the entity), embodiments may thus avoid the amount of HS-SCCH order signalling being increased compared to a case with a smaller total number of carriers.

In some embodiments of described methods, channel state feedback signalling may not be increased linearly with the number of carriers provided in a MC system. Channel state feedback typically comprises: Channel Quality Indicators (CQI) and Precoding Control Information (PCI). In one embodiment of this aspect, a single CQI value may be generated and fed back, that CQI value reflecting the average or overall channel quality (e.g. SINR) of all the carriers in an entity. Such a "overall" value may be preferred since it may take into account the coding gain achieved by coding and interleaving a single TrBlk across all the carriers of the entity.

In some embodiments of aspects described, a single CQI value may be supplemented by one or more additional differential CQI values, those additional values indicating the relative difference in channel quality between the CQI of a single carrier in the entity and the single (absolute) CQI value. In some embodiments, such differential CQI values may be fed back for one or more of the carriers in an entity. The number of bits required to signalling a differential CQI value within a network may typically be less than that required for an absolute CQI value, and therefore the total number of bits required can be reduced compared to signalling an absolute CQI value for each carrier in the entity. In some embodiments, one or more PCI values may be fed back per entity, depending on the frequency-domain granularity preferred for the precoding.

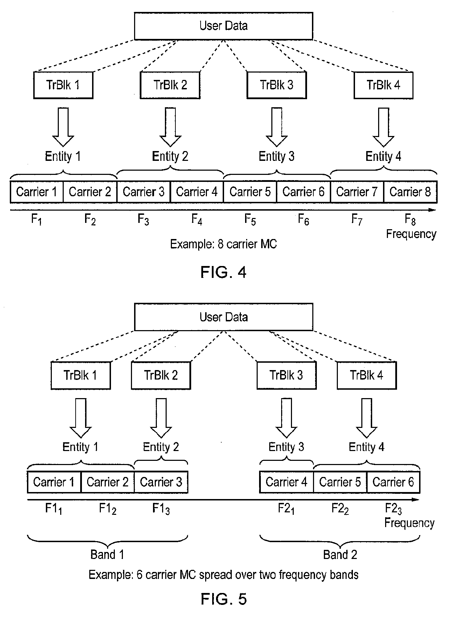

Figure 4 illustrates schematically a first example of a method of sending user data, that example combining elements of various embodiments described generally above.

### Example 1

In this example, a MC system has 8 carriers. According to an existing method of sending user data within a multicarrier wireless telecommunications network, a TrBlk is sent via each carrier and a UE would be required to send 8 acknowledgements, one for each of the TrBlks. In a MC system used in a UMTS network, having 4 carriers, a single feedback channel (namely the HS-DPCCH) is used to carry all acknowledgements. To carry 8 acknowledgements would require that feedback channel to double its capacity, and would increase the uplink signalling load.

According to the embodiment shown in Figure 4, 4 TrBlks are sent over 8 carriers where each TrBlk is sent using 2 carriers as illustrated schematically. In this example, the carriers are contiguous in the frequency spectrum. Thus, the uplink feedback needs only to include and transmit 4 acknowledgements and that feedback signalling can reuse the same format and physical channel as that used in a 4 carrier MC system.

A network may also serve legacy single carrier user equipment. In such a scenario, the number of such UEs may be different in each carrier. In the example illustrated in Figure 4, Carrier 1 has a high number of legacy UEs and consequently it has less resources available than Carrier 2. A base station may thus be operable, according to some embodiments, to allocate fewer information bits on Carrier 1 than in Carrier 2. Such a scheme would lead to Carrier 1 having fewer physical channels, for example, codes, than that in Carrier 2. The allocation of physical resources among the carriers within an entity will typically be a function of a scheduler.

Figure 5 illustrates schematically a second example of a method of sending user data, that example combining elements of various embodiments described generally above.

### Example 2

In the example illustrated in Figure 5, a MC system has 6 carriers spread over two frequency bands. In the illustrated embodiment, Carrier 1, 2 and 3 belongs to frequency band 1 whilst Carrier 4, 5 and 6 belongs to frequency band 2. In the illustrate embodiment, it is desired that the carriers in an entity shall be contiguous in the frequency spectrum and an entity shall not have more than 2 carriers. As a result, the carriers in the illustrated embodiment are grouped into 4 entities where Entity 1 contains Carrier 1 and Carrier 2, Entity 2 contains Carrier 3, Entity 3 contains Carrier 4 and Carrier 5 and Entity 4 contains Carrier 6.

A UE operating to send feedback in such a scheme can therefore re-use the formats and channels found in 4 carrier MC system for its acknowledgement since only 4 TrBlks need to be acknowledged.

Accordingly, it will be understood that embodiments described herein reduce the amount of signaling namely, the uplink acknowledgement, without changes to the physical resources within a network.

Embodiments allow a MC system with higher number of carriers to reuse the same signaling format and channels as those in a MC system with lower number of carriers. Therefore further increase in carriers does not add significant amount of signalling to support it. Conventional methods are not able to achieve addition of carriers without increasing network signalling.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of encoding and transmitting data from a first network node to a second network node in a multi-carrier wireless telecommunications network, said first network node being operable to transmit data to said second network node on a plurality of transmission carriers, each transmission carrier being transmitted within an associated predetermined radio frequency carrier,
said method comprising the steps of:
dividing user data to be transmitted from said first network node to said second network node into one or more transport blocks;
grouping said plurality of transmission carriers into one or more transmission carrier groups in accordance with predetermined carrier grouping criteria; and
transmitting each of said transport blocks of user data on one of said transmission carrier groups.

2. A method according to claim 1, wherein said step of grouping said transmission carriers comprises the steps of:
determining a number of available feedback signalling instances within said multi-carrier wireless telecommunications network and grouping said plurality of transmission carriers into a number of transmission carrier groups, said number of transmission carrier groups numbering no fewer than said determined number of available feedback signalling instances.

3. A method according to any preceding claim, wherein said step of grouping said transmission carriers comprises the steps of:
grouping said plurality of transmission carriers into one or more transmission carrier groups, each of said transmission carrier groups comprising a substantially identical number of transmission carriers.

4. A method according to any preceding claim, wherein said step of grouping said transmission carriers comprises the steps of:
allocating said plurality of transmission carriers to a transmission carrier group in dependence upon said predetermined radio frequency band associated with each of said plurality of transmission carriers.

5. A method according to claim 4, wherein said transmission carrier groups contain one or more of said plurality of transmission carriers having predetermined radio frequency bands associated therewith which are contiguous in a radio frequency domain.

6. A method according to any preceding claim, wherein said transmission carrier groups contain a different number of said plurality of transmission carriers.

7. A method according to any preceding claim, wherein said plurality of transmission carriers within a given transmission carrier group are operable to provide a different level of resource, and transmit differently sized portions of said transport block allocated to said transmission carrier group.

8. A computer program product operable, when executed on a computer, to perform the method of any one of claims 1 to 7.

9. A base station operable to encode and transmit data from said base station to user equipment in a multi-carrier wireless telecommunications network, said base station being operable to transmit data to said user equipment on a plurality of transmission carriers, each transmission carrier being transmitted within an associated predetermined radio frequency band,
said base station comprising:
data division logic operable to divide user data to be transmitted from said base station to said user equipment into one or more transport blocks;
carrier grouping logic operable to group said plurality of transmission carriers into one or more transmission carrier groups in accordance with predetermined carrier grouping criteria; and
transmission logic operable to transmit each of said transport blocks of user data on one of said transmission carrier groups.

10. A method of encoding and transmitting feedback information from a first network node to a second network node in a multi-carrier wireless telecommunications network, said first network node being operable to:
receive signals from said second network node on a plurality of reception carriers,
each reception carrier being transmitted within an associated predetermined radio frequency band, and
transmit data to said second network node on one or more transmission carriers,
said method comprising the steps of:
(i) determining that said plurality of reception carriers have been grouped into reception carrier groups in accordance with predetermined carrier grouping criteria;
(ii) monitoring for data traffic received across said determined reception carrier groups;
(iii) generating feedback information for said reception carrier group based upon received data traffic; and
(iv) encoding and transmitting a single feedback signal relating to said reception carrier group.

11. A computer program product operable, when executed on a computer, to perform the method of claim 10.

12. User equipment operable to encode and transmit feedback information from said user equipment to a base station in a multi-carrier wireless telecommunications network, said user equipment being operable to receive signals from said base station on a plurality of reception carriers, each reception carrier being transmitted within an associated predetermined radio frequency band, and
transmit data to said base station on one or more transmission carriers,
said user equipment comprising:
(i) determination logic operable to determine that said plurality of reception carriers have been grouped into reception carrier groups in accordance with predetermined carrier grouping criteria;
(ii) monitoring logic operable to monitor for data traffic received across said determined reception carrier groups;
(iii) feedback generation logic operable to generate feedback information for said reception carrier group based upon received data traffic; and
(iv) transmission logic operable to encode and transmit a single feedback signal relating to said reception carrier group.

13. A method of activating and deactivating carriers in a multi-carrier wireless telecommunications network, said multi-carrier telecommunications network comprising a plurality of first network nodes being operable to transmit signals to at least one second network node on a plurality of transmission carriers, each transmission carrier being transmitted within an associated predetermined radio band,
said method comprising the steps of:
determining that said plurality of transmission carriers have been grouped into transmission carrier groups in accordance with predetermined carrier grouping criteria;
determining that one or more transmission carrier groups meet a set of predetermined activation or deactivation criteria; and
transmitting a message to activate or deactivate said transmission carriers forming said one or more transmission carrier groups meeting said set of predetermined activation or deactivation criteria.

14. A computer program product operable, when executed on a computer, to perform the method of claim 13.

15. A network node operable to activate and deactivate carriers in a multi-carrier wireless telecommunications network, said multi-carrier telecommunications network comprising a plurality of first network nodes being operable to transmit signals to at least one second network node on a plurality of transmission carriers, each transmission carrier being transmitted within an associated predetermined radio band,
said network node comprising:
determination logic operable to determine that said plurality of transmission carriers have been grouped into transmission carrier groups in accordance with predetermined carrier grouping criteria;
activation logic operable to determine that one or more transmission carrier groups meet a set of predetermined activation or deactivation criteria; and
transmission logic operable to transmit a message to activate or deactivate said transmission carriers forming said one or more transmission carrier groups meeting said set of predetermined activation or deactivation criteria.
